# EUROPÄISCHE PATENTANMELDUNG

(11) **EP 1 089 424 A2**
(43) Veröffentlichungstag der Anmeldung: **04.04.2001**
(21) Anmeldenummer: 00121175.4
(22) Anmeldetag: 29.09.2000
(51) Int. Cl.: H02N 2/10, H02N 2/00

(54) **Schwingungsantrieb**

(30) Priorität: 30.09.1999 DE 19946820
(71) Anmelder: Schüssler GmbH & Co. KG, 63868 Grosswallstadt (DE)
(72) Erfinder: Dirks, Viktor, 63539 Grosskrotzenburg (DE)
(74) Vertreter: Wolf, Günter, Dipl.-Ing.

(57) **Zusammenfassung**

Die Erfindung betrifft Schwingungsantrieb, bestehend aus einem beweglich gelagerten Trägerelement (1), das durch ein Vibrationselement (3) in Schwingung versetzt wird, und einem zwischen dem Trägerelement (1) und einem zu bewegenden Körper (4) angeordneten Reibungselement (5). Nach der Erfindung ist dem Trägerelement (1) in einer gleichen Erstreckungsrichtung (7) ein zweites, ebenfalls beweglich gelagertes Trägerelement (2) zugeordnet, wobei die beiden Trägerelemente (1, 2) über das Vibrationselement (3) in der Erstreckungsrichtung (7) entgegengesetzt zueinander schwingfähig verbunden sind. Ferner ist das Reibungselement (5) am ersten Trägerelement (1) angeordnet und das zweite Trägerelement (2) ebenfalls mit einem Reibungselement (6) versehen. Schließlich bestehen die Reibungselemente (5, 6) aus einer Schicht (8), aus der eine Vielzahl von Widerhaken (9) herausragen, die schräg zur Schicht (8) ausgerichtet sind und mit ihren freien Enden (17) in Bewegungsrichtung des zu bewegenden Körpers (4) weisen.

## Beschreibung

Die Erfindung betrifft einen Schwingungsantrieb gemäß der Oberbegriffe der Ansprüche 1 und 2.

Ein derartiger Schwingungsantrieb ist nach der US 4,736,129 bekannt. Dort ist insbesondere ein Linearantrieb offenbart, der aus einem ebenen Trägerelement besteht, das beidseitig jeweils auf einem Vibrationselement aufgelagert ist. Mit Hilfe der Vibrationselemente wird in das Trägerelement eine Schwingung induziert, die dazu führt, dass sich ein auf dem Trägerelement aufliegender Körper in eine bestimmte Richtung bewegt. Dabei hängt die Bewegungsrichtung von der induzierten Schwingung ab, wobei insbesondere zu beachten ist, dass nach der genannten US 4,736,129 die Schwingung mit Hilfe von piezoelektrischen Elementen in das Trägerelement induziert wird. Diese führen zu einer sogenannten propagierenden Welle, d.h. das Trägerelement wird im Prinzip nur zu Vertikalschwingungen angeregt, die ihrerseits dazu führen, dass sich über das Trägerelement verteilt ein Wellengebiet ausbildet, dessen Wellen in eine von der Anregungsschwingung abhängige Richtung verlaufen und auf diese Weise den aufliegenden Körper transportieren. Zur Vermeidung von unnötigem Schlupf ist dabei ein Reibungselement vorgesehen, dass zu einer verbesserten Haftung zwischen dem Körper und dem Trägerelement führt.

Mit Hilfe der beschriebenen Anordnung ist es also möglich, einen Körper vor allem in horizontaler Richtung zu bewegen. Ob auch eine Steigung überwunden werden kann, hängt dabei in erster Linie von der Reibung zwischen dem Körper und dem Trägerelement ab, die aber, da immer nur die Wellenberge in Kontakt zum Körper stehen, relativ gering ist, so dass die zu überwindenden Steigungen nicht allzu groß sein dürften.

Ferner ist zu beachten, dass beim vorbeschriebenen Linearantrieb die Bewegungsrichtung auf dem Trägerelement davon abhängt, in welcher Richtung sich die Wellen ausbreiten. Die Wellenausbreitung wiederum wird in erster Linie von der Frequenz der Schwingung und dem Material des Trägerelements beeinflußt, woraus folgt, dass bei der Auslegung oder der Installation eines solchen Linearantriebs eine genaue Parameterauswahl stattfinden muss.

Aus der DE 37 35 623 C2 ist darüber hinaus ein Piezo-Antrieb für rotierende und linear arbeitende Motoren bekannt. Ein Tragelement trägt Stifte, die schräg zur Bewegungsrichtung gestellt sind und die mit ihrem einen Ende in Bewegungsrichtung weisen. Die Schwingungsrichtung des Tragelements ist von untergeordneter Bedeutung und kann in Bewegungsrichtung oder senkrecht dazu sein.

Ferner ist aus der DE-OS 23 56 116 eine Transportvorrichtung mit einer vibrierenden, schräggestellte Florfäden aufweisenden Transportrinne bekannt.

Schließlich offenbart die DE 38 25 587 A1 einen weitverbreiteten Typ von Piezomotoren (den sogenannten "Inchworm"), der zwei als Klemmstellen ausgebildete Kontaktstellen aufweist. Zwischen den Klemmstellen ist ein Piezoaktor vorgesehen, der den Abstand zwischen den Klemmstellen im Rhythmus mit den Klemmvorgängen verkürzt oder verlängert.

Der Erfindung liegt von der US 4,736,129 als nächstliegendem Stand der Technik ausgehend die Aufgabe zugrunde, einen Antrieb zu schaffen, bei dem sich unabhängig von der Erregungsfrequenz und dem Material des Trägerelements gezielt nur eine einzige Bewegungsrichtung einstellen kann und mit dem auch, bei Bedarf, Steigungen ohne weiteres bewältigbar sind.

Diese Aufgabe ist mit einem Schwingungsantrieb der eingangs genannten Art dadurch gelöst, dass erstens dem Trägerelement in einer gleichen Erstreckungsrichtung ein zweites, ebenfalls beweglich gelagertes Trägerelement zugeordnet ist, wobei die beiden Trägerelemente über das Vibrationselement in der Erstreckungsrichtung entgegengesetzt zueinander schwingfähig verbunden sind, dass zweitens das Reibungselement am ersten Trägerelement angeordnet und das zweite Trägerelement ebenfalls mit einem Reibungselement versehen ist und dass drittens die Reibungselemente aus einer Schicht bestehen, aus der eine Vielzahl von Widerhaken herausragen, die schräg zur Schicht ausgerichtet sind und mit ihren freien Enden in Bewegungsrichtung des zu bewegenden Körpers weisen.

Wesentlich für den erfindungsgemäßen Schwingungsantrieb ist damit, dass die Bewegung eines auf den Trägerelementen aufliegenden Körpers nicht durch vertikale Wellen und die so entstehende propagierende Welle, sondern durch parallel zur Bewegungsrichtung des Körpers verlaufende Schwingungen hervorgerufen wird.

Für die Bewegung des Körpers ist dabei das Zusammenspiel der beiden zueinander schwingenden Trägerelemente wesentlich: Bewegen sich die beiden Trägerelemente aufeinander zu, so bleibt der Körper aufgrund der Widerhaken an dem einen Trägerelement haften, während er sich ein der Amplitude entsprechendes Stück über das zweite Trägerelement hinweg schiebt, da die Widerhaken dieses Elements der Bewegung in dieser Richtung keinen Widerstand entgegensetzen können. Bewegen sich die beiden Trägerelemente voneinander weg, geschieht im Prinzip der umgekehrte Vorgang, d.h. der Körper rutscht über das erste Trägerelement hinweg, während er am zweiten Trägerelement haften bleibt. - Der Körper bewegt sich folglich mit jeder Schwingung der Trägerelemente in die Richtung weiter, in die die freien Enden der schräg zu den Trägerelementen ausgerichteten Widerhaken weisen.

Voraussetzung für die Bewegung ist, dass der Körper jeweils mit zwei Trägerelementen in Kontakt steht, wobei bei entsprechend hoher Schwingungsfrequenz und Trägheit des Körpers dieser sich letztlich auch auf einer Trägerplatte in Richtung der Widerhaken verschieben würde. Um aber unabhängig von Trägheit und Schwingungsfrequenz zu sein, ergibt sich die Kombination zweier Trägerelemente gewissermaßen als Grundkonzeption, wobei aber die vielfältigen, technischen Anwendungsmöglichkeiten dieser Grundkonzeption in der Regel aus einer Vielzahl solcher Trägerelementenpaaren bestehen, was noch näher erläutert wird.

Vorteilhafte Weiterbildungen des Trägerelementenpaares bestehen in Folgendem:

Zur Vermeidung eines aufwendigen Schwingungsantriebs hat es sich als vorteilhaft erwiesen, das Vibrationselement aus einem piezoelektrischen Element zu bilden. Diese Elemente sind relativ preiswert, einteilig, verschleißfrei und lassen sich problemlos elektrisch steuern.

Ferner ist vorteilhaft vorgesehen, dass die Widerhaken aus der Schicht weniger als 1 mm herausragen. Diese Längenbegrenzung der Widerhaken hat zur Folge, dass auch bei relativ schweren Körpern nicht die Gefahr des Umbiegens aller Widerhaken und damit eventuell des Abbrechens besteht, wobei der Längenbegrenzung nach unten und damit der Begrenzung der Belastbarkeit nur durch mangelnde "Verhakungsmöglichkeit" Grenzen gesetzt sind. Vorstellbar sind dabei ohne weiteres Widerhaken, die nicht mehr als einige Nanometer aus der Schicht herausstehen. Entscheidend für die Fördereigenschaften sind hierbei letztlich die miteinander in Kontakt gebrachten Materialien.

Eine andere vorteilhafte Weiterbildung besteht darin, dass die Widerhaken elastisch ausgebildet sind und sich bei Belastung, in Bewegungsrichtung des Körpers gesehen, an die Schicht anlegen. Hierdurch wird bewirkt, und zwar ähnlich wie bei einer entsprechenden Längenbegrenzung der Widerhaken, dass die Widerhaken nicht bei Überbelastung versehentlich abbrechen. Eine Funktionsstörung ist dabei ebenfalls nicht zu erwarten, da insbesondere die am Randbereich eines Körpers angreifenden Widerhaken noch ohne weiteres eine "Verhakungs-" und damit Antriebswirkung haben.

Weitere vorteilhafte Ausführungsformen des Trägerelementenpaares ergeben sich nach den Ansprüchen 6 bis 12, die in der speziellen Beschreibung der Ausführungsbeispiele genauer erläutert werden.

Von besonderer Bedeutung ist die Weiterbildung des Schwingungsantriebs nach Anspruch 13, wonach eine Vielzahl von Trägerelementenpaaren matrixartig und, eine im wesentlichen geschlossene Fläche bildend, in einer Ebene angeordnet sind, wobei die Vibrationselemente der Trägerelementenpaare jeweils elektrisch separat wahlweise steuer- oder regelbar und die Trägerelementenpaare in Abhängigkeit von einer gewünschten Bewegungsrichtung des Körpers ausgerichtet sind. Auf Basis einer solchen Ausführungsform ist es nämlich möglich, was noch genauer beschrieben wird, eine Fläche vorzusehen, mittels der gezielt elektronisch steuerbar einzelne Körper in eine beliebige Richtung transportiert werden können, ohne dass es eines äußeren Eingriffs an den Trägerelementenpaaren bedarf. Eine derart ausgestaltete Fläche eignet sich dabei insbesondere beispielsweise als Weichenelement bei Fließbandanlagen, wobei die verwendeten Materialien und Größen der Trägerelemente im wesentlichen von der Größe der zu bewegenden Körper abhängen.

Ferner ist ein Schwingungsantrieb vorgesehen, bei dem eine Vielzahl von Trägerelementenpaaren in einer Ebene kreisringförmig, einen vibrierenden Stator bildend, angeordnet sind, auf den ein anzutreibender, ebenfalls kreisringförmiger Rotor wahlweise unter Schwerkraft oder unter zusätzlichem äußeren Druck aufgesattelt ist, wobei der Stator und der Rotor eine gleiche (Dreh-) Achse aufweisen. Ein solcher Schwingungsantrieb dient nicht, wie das vorerwähnte Weichenelement zum Transport von Körpern, sondern kann als Rotationsmotor für beliebige Zwecke eingesetzt werden; insbesondere kommen dabei Anwendungen in explosionsgefährdeten Räumen in Betracht, denn ein Zündfunke, wie er etwa bei Elektromotoren entsteht, tritt bei dem erfindungsgemäßen Schwingungsantrieb systembedingt nicht auf.

Alternativ kann ferner ein Schwingungsantrieb vorgesehen werden, bei dem ein Trägerelementenpaar in Form einer gewölbten Ebene ausgebildet ist, die kreissegmentartig einen Bestandteil eines aus einer Vielzahl solcher Trägerelementenpaare zusammengesetzten Statorringes bildet, wobei wahlweise, je nach Orientierung der Trägerelementenpaare, der Statorring von einem Rotor umfaßt wird oder der Stator einen Rotor umfaßt. Im Gegensatz zum erst genannten Rotations-Scheibenantrieb handelt es sich bei diesem Schwingungsantrieb mithin um einen zylindrisch ausgebildeten Rotationsantrieb, der einem herkömmlichen Elektromotor im Aufbau ähnelt.

Schließlich betrifft die Erfindung gemäß dem unabhängigen Nebenanspruch 2 einen Schwingungsantrieb, der aus einem von einem Vibrationselement in Schwingung versetzten Stator und einem angetriebenen Rotor besteht, die eine gemeinsame (Dreh-) Achse aufweisen, wobei zwischen dem Stator und dem Rotor eine Reibungselement angeordnet ist. Bei einem solchen, nach der EP 0 317 976 bekannten Schwingungsantrieb besteht ebenfalls die Problematik, dass die Bewegungs- bzw. Drehrichtung des Rotors von einer Vielzahl von Parametern wie Material, Schwingungsfrequenz usw. abhängt. Zur Vermeidung dieser Abhängigkeit, also letztendlich zur Lösung des Problems, das auch mit dem Schwingungsantrieb nach Anspruch 1 gelöst wird, ist vorgesehen, dass erstens das Reibungselement aus einer Schicht besteht, aus der eine Vielzahl von Widerhaken herausragen, die schräg zur Schicht und rotationssymmetrisch zur Achse ausgerichtet sind und mit ihren freien Enden in Drehrichtung des angetriebenen Rotors weisen, und dass zweitens das Vibrationselement im wesentlichen eine Vibrationsrichtung aufweist und zur Erzeugung einer um die Achse oszillierenden Drehbewegung des Stators, in Vibrationsrichtung gesehen, senkrecht und seitlich beabstandet zur Achse angeordnet und einerseits ortsfest und andererseits an den Stator angebunden ist.

Vorteilhafte Weiterbildungen zur Lösung gemäß Anspruch 2 ergeben sich nach den abhängigen Ansprüchen 3 bis 10 sowie 16 und 17.

Der erfindungsgemäße Schwingungsantrieb und seine vorteilhaften Weiterbildungen werden nachfolgend anhand der zeichnerischen Darstellung von Ausführungsbeispielen näher erläutert.

### Es zeigt

- Fig. 1: in Seitenansicht und schematisiert die Grundkonzeption des Schwingungsantriebs;
- Fig. 2: im Schnitt eine Ausführungsform der Widerhaken;
- Fig. 3: in Draufsicht die Widerhaken gemäß Fig. 2;
- Fig. 4: in Seitenansicht borstenartige Widerhaken;
- Fig. 5: in Seitenansicht lamellenartige Widerhaken;
- Fig. 6: in Seitenansicht und schematisiert ein auf verformbaren Elementen gelagerter Schwingungsantrieb;
- Fig. 7: in Draufsicht eine Grundfläche mit elektrischen Zuleitungen;
- Fig. 8: in Draufsicht ein Weichenelement aus einer Vielzahl von Trägerelementpaaren;
- Fig. 9: in Draufsicht und stark schematisiert der Stator eines Rotations-Scheibenantriebs;
- Fig. 10: in Seitenansicht Stator und Rotor des Scheibenantriebs gemäß Fig. 9;
- Fig. 11: im Schnitt ein Segment eines Rotations-Schwingungsantriebs;
- Fig. 12: in Seitenansicht und schematisiert der Rotationsantrieb gemäß Fig. 11 mit Stator innen und Rotor aussen;
- Fig. 13: in Seitenansicht eine weitere Ausführungsform eines Rotationsantriebs mit Stator aussen und Rotor innen;
- Fig. 14: in perspektivischer Darstellung eine Ausführungsform des Antriebs gemäß dem unabhängigen Nebenanspruch und schließlich
- Fig. 15: ebenfalls in perspektivischer Darstellung der Stator des Antrieb gemäß Fig. 14 mit Rückdrehsicherung.

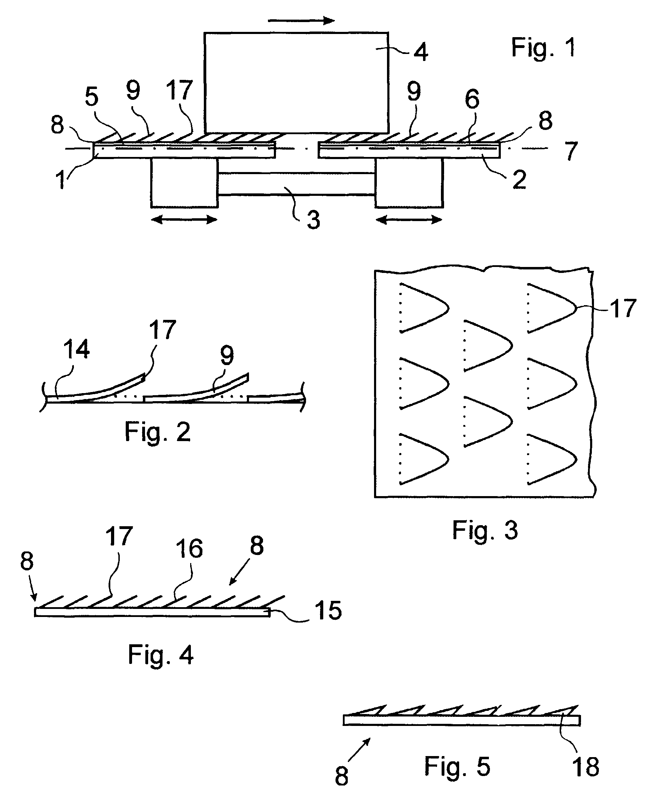

Der in Fig. 1 dargestellte Schwingungsantrieb besteht aus einem beweglich gelagerten Trägerelement 1, das durch ein Vibrationselement 3 in Schwingung versetzt wird, und einem zwischen dem Trägerelement 1 und einem zu bewegenden Körper 4 angeordneten Reibungselement 5. Wesentlich für diesen Schwingungsantrieb ist nun, dass erstens dem Trägerelement 1 in einer gleichen Erstreckungsrichtung 7 ein zweites, ebenfalls beweglich gelagertes Trägerelement 2 zugeordnet ist, wobei die beiden Trägerelemente 1, 2 über das Vibrationselement 3 in der Erstreckungsrichtung 7 entgegengesetzt zueinander schwingfähig verbunden sind, dass zweitens das Reibungselement 5 am ersten Trägerelement 1 angeordnet und das zweite Trägerelement 2 ebenfalls mit einem Reibungselement 6 versehen ist und dass drittens die Reibungselemente 5, 6 aus einer Schicht 8 bestehen, aus der eine Vielzahl von Widerhaken 9 herausragen, die schräg zur Schicht 8 ausgerichtet sind und mit ihren freien Enden 17 in Bewegungsrichtung des zu bewegenden Körpers 4 weisen.

Als Vibrationselement 3 kommen alle Antriebe in Betracht, mit denen die beiden Trägerelemente 1, 2 relativ zueinander bewegt werden können. Dazu zählen beispielsweise elektromotorische, aber auch mechanische Antriebe, wobei vorteilhaft vorgesehen ist, die beiden Trägerelemente 1, 2 über ein piezoelektrisches Element miteinander zu verbinden.

Ferner ist aus den vorgenannten Gründen vorteilhaft vorgesehen, dass die Widerhaken 9 aus der Schicht 8 weniger als 1 mm herausragen. Eine mögliche Ausführungsform einer solchen Schicht 8 mit Widerhaken 9 ist in den Figuren 2 und 3 dargestellt. Diese besteht aus einer dünnen, wahlweise aus Kunststoff, Metall gebildeten Folie 14, auf der gleichgerichtete, schuppenartige Widerhaken 9 durch Teilstanzen und nachfolgendes Biegen ausgeformt sind.

Je nach Verwendungsfall ist dabei vorteilhaft vorgesehen, dass die Widerhaken 9, um ein Abbrechen zu verhindern, elastisch ausgebildet sind und sich bei Belastung, in Bewegungsrichtung des Körpers 4 gesehen, an die, beispielsweise auf die Trägerelemente 1, 2 aufgeklebte Schicht 8 anlegen.

Sollte keine Bruchgefahr bestehen, ist auch der Einsatz einer Schicht aus Keramik oder Glas möglich.

Bei der in Fig. 4 dargestellten Schicht 8 ist vorgesehen, dass in dieser gleichgerichtete, aus dem Trägermaterial 15 herausstehende Borsten 16 eingebettet sind. Alternativ dazu zeigt Fig. 5 eine Schicht 8, die aus sägezahnartigen Lamellen besteht und beispielsweise mit Hilfe einer Ätztechnik hergestellt wird.

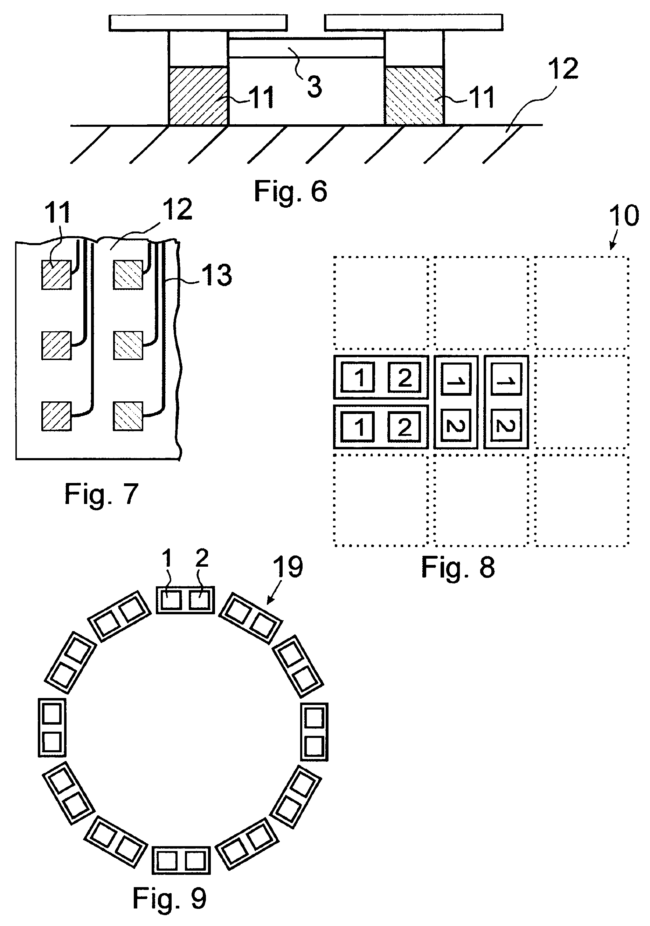

In Fig. 6 ist der Schwingungsantrieb gemäß Fig. 1 nochmals dargestellt, wobei bei dieser Ausführungsform vorteilhaft vorgesehen ist, dass die beweglich gelagerten Trägerelemente 1, 2 mittels elastischer, im wesentlichen in Bewegungsrichtung des Körpers 4 verformbarer Elemente 11 auf einer Grundfläche 12 angeordnet sind. Als verformbare Elemente 11 kommen dabei in Abhängigkeit von der benötigten Belastbarkeit des Antriebs beispielsweise elastische Kunststoffe oder Gummi in Betracht, wobei darüber hinaus vorteilhaft vorgesehen ist, dass erstens auf der Grundfläche 12 elektrische Leiterbahnen angeordnet sind (siehe Fig. 7), dass zweitens die verformbaren Elemente 11 aus einem elektrisch leitfähigen Material gebildet sind und jeweils mit einer Leiterbahn 13 in elektrischem Kontakt stehen, und dass drittens die verformbaren Elemente 11 in elektrischem Kontakt zu den Vibrationselementen 3 stehen. Auf Basis einer solchen Ausführungsform ist es dann, wie in Fig. 8 dargestellt, ohne weiteres vorteilhaft möglich, eine Vielzahl von Trägerelementenpaaren 1, 2 matrixartig und eine im wesentlichen geschlossene Fläche bildend in einer Ebene 10 anzuordnen, wobei die Vibrationselemente 3 der Trägerelementenpaare 1, 2 jeweils elektrisch separat wahlweise steueroder regelbar und die Trägerelementenpaare 1, 2 in Abhängigkeit von einer gewünschten Bewegungsrichtung des Körpers 4 ausgerichtet sein können.

Eine solche, gewissermaßen ein Weichenelement bildende Anordnung von Schwingungsantrieben ist überall dort einsetzbar, wo von Förderbändern oder dgl. transportierte Gegenstände in eine andere Transportrichtung umgelenkt werden sollen, wobei mit der erfindungsgemäßen Anordnung sogar gezielt ein einzelner Körper beispielsweise geradeaus und ein anderer, nachfolgender Körper im nächsten Moment rechtwinklig weiter transportierbar ist.

Hinreichend klein, aber entsprechend belastbar ausgebildet, sind Weichenelemente mit einigen zehn bis mehrere hundert Trägerelementenpaare 1, 2 für eine derartige Anwendung vorgesehen.

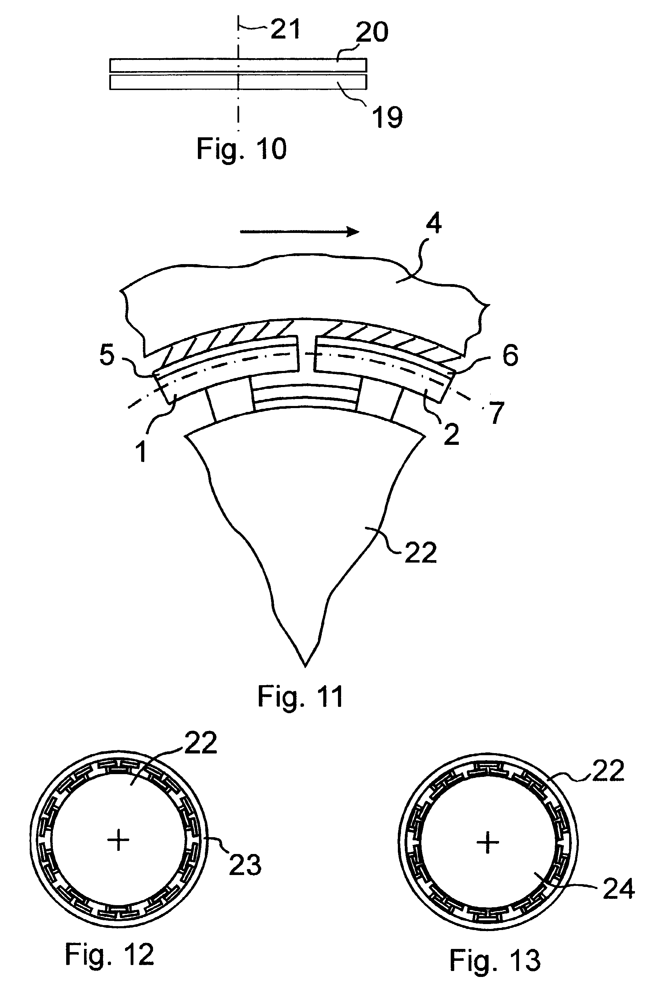

In Fig. 9 ist eine weitere, vorteilhafte Ausführungsform des Schwingungsantriebs schematisch dargestellt. Dabei sind ebenfalls eine Vielzahl von Trägerelementenpaaren 1, 2 in einer Ebene kreisringförmig, einen vibrierenden Stator 19 bildend angeordnet, auf den ein anzutreibender, ebenfalls kreisringförmiger Rotor 20 wahlweise unter Schwerkraft oder unter zusätzlichem äußeren Druck aufgesattelt ist (siehe Fig. 10), wobei der Stator 19 und der Rotor 20 eine gleiche (Dreh-) Achse 21 aufweisen.

Alternativ zum vorbeschriebenen, scheibenartigen ist gemäß den Figuren 11, 12 und 13 ein zylinderförmiger Schwingungsantrieb vorgesehen. Bei diesem ist ein Trägerelementenpaar 1, 2 in Form einer gewölbten Ebene ausgebildet, die kreissegmentartig einen Bestandteil eines aus einer Vielzahl solcher Trägerelementenpaare 1, 2 zusammengesetzten Statorringes 22 bilden, wobei wahlweise, je nach Orientierung der Trägerelementenpaare 1, 2, der Statorring 22, wie in Fig. 12 dargestellt, von einem Rotor 23 umfaßt wird oder (siehe Fig. 13) der Stator 22 seinerseits einen Rotor 24 umfaßt.

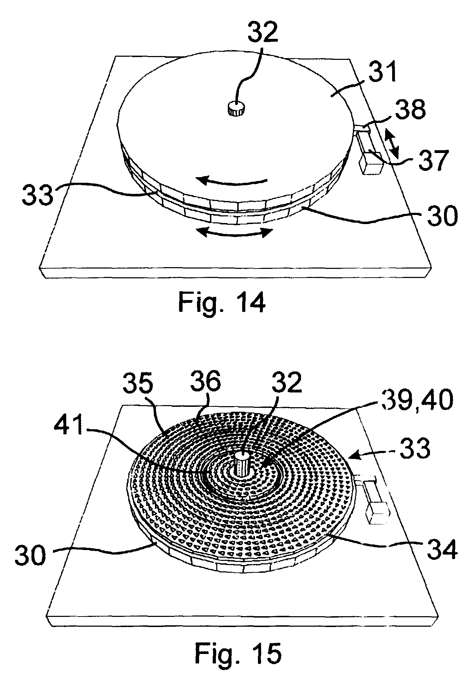

Fig. 14 zeigt eine weitere, alternative Ausführungsform, die aus einem von einem Vibrationselement 37 in Schwingung versetzten Stator 30 und einem angetriebenen Rotor 31 besteht. Stator 30 und Rotor 31 weisen eine gemeinsame (Dreh-) Achse 32 auf, wobei zwischen dem Stator 30 und dem Rotor 31 wiederum ein Reibungselement 33 angeordnet ist. Wesentlich für diesen Schwingungsantrieb ist, dass erstens das Reibungselement 33 aus einer Schicht 34 besteht, aus der eine Vielzahl von Widerhaken 35 herausragen, die schräg zur Schicht 34 und rotationssymmetrisch zur Achse 32 ausgerichtet sind und mit ihren freien Enden 36 in Drehrichtung des angetriebenen Rotors 31 weisen, und dass zweitens das Vibrationselement 37 im wesentlichen eine Vibrationsrichtung 38 aufweist und zur Erzeugung einer um die Achse 32 oszillierenden Drehbewegung des Stators 30, in Vibrationsrichtung 38 gesehen, senkrecht und seitlich beabstandet zur Achse 32 angeordnet und einerseits ortsfest und andererseits an den Stator 30 angebunden ist.

Es wird darauf hingewiesen, dass der Antrieb gemäß Anspruch 2 nicht nur, wie in Fig. 14 dargestellt, scheibenförmig, sondern auch zylinderförmig ausgebildet sein kann, wobei dann, im Unterschied zu den Antrieben gemäß den Figuren 12 und 13, zwischen Stator und Rotor lediglich das Reibungselement anzuordnen ist, während das Vibrationselement exzentrisch am Stator angreift.

Schließlich ist noch, wie in Fig. 15 dargestellt, vorteilhaft vorgesehen, dass am Rotor 31 eine Rückdrehsicherung 39 angeordnet ist. Diese Rückdrehsicherung 39 ist aus einem zusätzlichen, ortsfest bzw. verdrehfest beim Stator 30 angeordneten Reibungselement 40 gebildet, dessen Widerhaken 41 in die gleiche Richtung weisen wie die Widerhaken 35 des Reibungselements 33, wobei der in Fig. 15 nicht dargestellte Rotor 31 sowohl mit dem Reibungselement 33 des Stators 30 als auch mit dem Reibungselement 40 der Rückdrehsicherung 39 in Kontakt steht.

## Patentansprüche

1. Schwingungsantrieb, bestehend aus einem beweglich gelagerten Trägerelement (1), das durch ein Vibrationselement (3) in Schwingung versetzt wird, und einem zwischen dem Trägerelement (1) und einem zu bewegenden Körper (4) angeordneten Reibungselement (5),
**dadurch gekennzeichnet,**
dass dem Trägerelement (1) in einer gleichen Erstreckungsrichtung (7) ein zweites, ebenfalls beweglich gelagertes Trägerelement (2) zugeordnet ist, wobei die beiden Trägerelemente (1, 2) über das Vibrationselement (3) in der Erstreckungsrichtung (7) entgegengesetzt zueinander schwingfähig verbunden sind,
dass das Reibungselement (5) am ersten Trägerelement (1) angeordnet und das zweite Trägerelement (2) ebenfalls mit einem Reibungselement (6) versehen ist und
dass die Reibungselemente (5, 6) aus einer Schicht (8) bestehen, aus der eine Vielzahl von Widerhaken (9) herausragen, die schräg zur Schicht (8) ausgerichtet sind und mit ihren freien Enden (17) in Bewegungsrichtung des zu bewegenden Körpers (4) weisen.

2. Schwingungsantrieb, bestehend aus einem von einem Vibrationselement (37) in Schwingung versetzten Stator (30) und einem angetriebenen Rotor (31), die eine gemeinsame (Dreh-) Achse (32) aufweisen, wobei zwischen dem Stator (30) und dem Rotor (31) ein Reibungselement (33) angeordnet ist,
**dadurch gekennzeichnet,**
dass das Reibungselement (33) aus einer Schicht (34) besteht, aus der eine Vielzahl von Widerhaken (35) herausragen, die schräg zur Schicht (34) und rotationesymmetrisch zur Achse (32) ausgerichtet sind und mit ihren freien Enden (36) in Drehrichtung des angetriebenen Rotors (31) weisen, und
dass das Vibrationselement (37) im wesentlichen eine Vibrationsrichtung (38) aufweist und zur Erzeugung einer um die Achse (32) oszillierenden Drehbewegung des Stators (30), in Vibrationsrichtung (38) gesehen, senkrecht und seitlich beabstandet zur Achse (32) angeordnet und einerseits ortsfest und andererseits an den Stator (30) angebunden ist.

3. Schwingungsantrieb nach Anspruch 1 oder 2,
**dadurch gekennzeichnet,**
dass das Vibrationselement (3, 37) aus einem piezoelektrischen Element gebildet ist.

4. Schwingungsantrieb nach einem der Ansprüche 1 bis 3,
**dadurch gekennzeichnet,**
dass die Widerhaken (9, 35) aus der Schicht (8, 34) weniger als 1 mm herausragen.

5. Schwingungsantrieb nach einem der Ansprüche 1 bis 4,
**dadurch gekennzeichnet,**
dass die Widerhaken (9, 35) elastisch ausgebildet sind und sich bei Belastung, in Bewegungsrichtung des Körpers (4) bzw. des Rotors (31) gesehen, an die Schicht (8, 34) anlegen.

6. Schwingungsantrieb nach einem der Ansprüche 1 bis 5,
**dadurch gekennzeichnet,**
dass die Schicht (8, 34) aus einer dünnen Folie (14) besteht, aus der gleichgerichtete, schuppenartige Widerhaken (9) ausgeformt sind.

7. Schwingungsantrieb nach Anspruch 6,
**dadurch gekennzeichnet,**
dass die Folie (14) wahlweise aus Kunststoff, Metall, Keramik oder Glas gebildet ist, wobei die Widerhaken (9, 35) wahlweise durch Teilstanzen und nachfolgendes Biegen, durch Prägen oder Ätzen ausgeformt sind.

8. Schwingungsantrieb nach Anspruch 6 oder 7,
**dadurch gekennzeichnet,**
dass die schuppenförmigen Widerhaken (9, 35) im wesentlichen parabelförmig ausgebildet sind.

9. Schwingungsantrieb nach Anspruch 1 bis 5,
**dadurch gekennzeichnet,**
dass die Schicht (8, 34) aus einem Trägermaterial (15) besteht, in das gleichgerichtete, aus dem Trägermaterial (15) herausstehende Borsten (16) eingebettet sind.

10. Schwingungsantrieb nach einem der Ansprüche 1 bis 5,
**dadurch gekennzeichnet,**
dass die Schicht (8, 34) aus einem sägezahnartigen Lamellenprofil (18) besteht.

11. Schwingungsantrieb nach einem der Ansprüche 1, 3 bis 10,
**dadurch gekennzeichnet,**
dass die beweglich gelagerten Trägerelemente (1, 2) mittels elastischer, im wesentlichen in Bewegungsrichtung des Körpers (4) verformbarer Elemente (11) auf einer Grundfläche (12) angeordnet sind.

12. Schwingungsantrieb nach Anspruch 11,
**dadurch gekennzeichnet,**
dass auf der Grundfläche (12) elektrische Leiterbahnen (13) angeordnet sind,
dass die verformbaren Elemente (11) aus einem elektrisch leitfähigen Material gebildet sind und jeweils mit einer Leiterbahn (13) in elektrischem Kontakt stehen, und
dass die verformbaren Elemente (11) in elektrischem Kontakt zu den Vibrationselementen (3) stehen.

13. Schwingungsantrieb nach einem der Ansprüche 1, 3 bis 12,
**dadurch gekennzeichnet,**
dass eine Vielzahl von Trägerelementenpaaren (1, 2) matrixartig und, eine im wesentlichen geschlossene Fläche bildend, in einer Ebene (10) angeordnet sind, wobei die Vibrationselemente (3) der Trägerelementenpaare (1, 2) jeweils elektrisch separat wahlweise steuer- oder regelbar und die Trägerelementenpaare (1, 2) in Abhängigkeit von einer gewünschten Bewegungsrichtung des Körpers (4) ausgerichtet sind.

14. Schwingungsantrieb nach einem der Ansprüche 1, 3 bis 12,
**dadurch gekennzeichnet,**
dass eine Vielzahl von Trägerelementenpaaren (1, 2) in einer Ebene kreisringförmig, einen vibrierenden Stator (19) bildend angeordnet sind, auf den ein anzutreibender, ebenfalls kreisringförmiger Rotor (20, 4) wahlweise unter Schwerkraft oder unter zusätzlichem äußeren Druck aufgesattelt ist, wobei der Stator (19) und der Rotor (20) eine gleiche (Dreh-) Achse (21) aufweisen.

15. Schwingungsantrieb nach einem der Ansprüche 1, 3 bis 12,
**dadurch gekennzeichnet,**
dass ein Trägerelementenpaar (1, 2) in Form einer gewölbten Ebene ausgebildet ist, die kreissegmentartig einen Bestandteil eines aus einer Vielzahl solcher Trägerelementenpaare (1, 2) zusammengesetzten Statorringes (22) bilden, wobei wahlweise, je nach Orientierung der Trägerelementenpaare (1, 2), der Statorring (22) von einem Rotor (23, 4) umfaßt wird oder der Stator (22) einen Rotor (24, 4) umfaßt.

16. Schwingungsantrieb nach einem der Ansprüche 2 bis 10,
**dadurch gekennzeichnet,**
dass am Rotor (31) eine Rückdrehsicherung (39) angeordnet ist.

17. Schwingungsantrieb nach Anspruch 16,
**dadurch gekennzeichnet,**
dass die Rückdrehsicherung (39) aus einem zusätzlichen, ortsfest beim Stator (30) angeordneten Reibungselement (40) gebildet ist, dessen Widerhaken (41) im wesentlichen in die gleiche Richtung weisen wie die Widerhaken (35) des Reibungselements (33), wobei der Rotor (31) sowohl mit dem Reibungselement (33) des Stators (30) als auch mit dem Reibungselement (40) der Rückdrehsicherung (39) in Kontakt steht.
